# DEMANDE DE BREVET EUROPEEN

(11) **EP 2 072 342 A1**
(43) Date de publication de la demande: **24.06.2009**
(21) Numéro de dépôt: 08169684.1
(22) Date de dépôt: 21.11.2008
(51) Int. Cl.: B60R 19/24, B62D 29/04

(54) **Peau de pare-chocs améliorée**

(30) Priorité: 20.12.2007 FR 0760093
(71) Demandeur: Peugeot Citroën Automobiles SA, 78140 Vélizy-Villacoublay (FR)
(72) Inventeur: Hasnaoui, Farid, 90400 Trevenans (FR); Keller, Grégory, 68700 Steinbach (FR)
(74) Mandataire: Allain, Laurent

(57) **Abrégé**

Cette peau de pare-chocs comporte une face (4) à raccorder, le long d'un profil, à une face (15) d'une aile (1). La peau (2) a un rebord (6) définissant une première surface de contact (8) et l'aile comporte un rebord (16) définissant une seconde surface de contact (17). La peau comporte des premiers moyens de positionnement (10, 11) venus de matière avec la peau et en saillie sur la première surface, ces premiers moyens de positionnement (20, 21) coopérant avec des seconds moyens de positionnement prévus sur la seconde surface pour positionner la peau sur l'aile de sorte que les première et seconde surfaces sont appliquées l'une contre l'autre dans une position relative prédéterminée. Les premiers moyens de positionnement comprennent un relief et les seconds moyens de positionnement comprennent un évidement conjugué du relief, la pénétration du relief dans l'évidement assurant le positionnement relatif de la peau et de l'aile dans un plan parallèle aux surfaces de contact.

## Description

La présente invention concerne un pare-chocs et son montage sur un élément de carrosserie.

Plus particulièrement, l'invention concerne une peau de pare-chocs et son montage sur l'aile d'un véhicule.

L'invention est relative en premier lieu à une peau de pare-chocs pour véhicule, du type comportant une première face extérieure devant être raccordée, le long d'un profil de raccordement, à une seconde face extérieure d'une aile du véhicule, la peau comportant un premier rebord définissant une première surface de contact formant avec la face extérieure de la peau une première arête qui suit le profil de raccordement, l'aile comportant un second rebord définissant une seconde surface de contact formant avec la face extérieure de l'aile une seconde arête qui suit le profil de raccordement, la peau comportant en outre des premiers moyens de positionnement venus de matière avec la peau et en saillie sur la première surface de contact, ces premiers moyens de positionnement étant aptes à coopérer avec des seconds moyens de positionnement conjugués prévus sur la seconde surface de contact, pour positionner la peau de pare-chocs sur l'aile de telle sorte que les première et seconde surfaces de contact sont appliquées l'une contre l'autre dans une position relative prédéterminée, avant mise en place de moyens de fixation du premier rebord sur le second rebord.

Les faces extérieures de la peau et de l'aile participent à l'esthétique du véhicule. En conséquence, le profil de raccordement entre ces deux faces extérieures est particulièrement étudié et les dessins préparatoires conduisent à spécifier, avec des tolérances géométriques réduites, le positionnement relatif de la peau et de l'aile.

Pour assembler la peau sur l'aile, il est connu d'utiliser une pièce supplémentaire, appelée presseur latéral. Le presseur comporte des moyens de fixation et des moyens de positionnement. Grâce à ses moyens de fixation et à des moyens de fixation conjugués prévus sur la peau de pare-chocs, le presseur est d'abord fixé sur un premier rebord de la peau, de telle sorte que les moyens de positionnement du presseur soient en saillie par rapport à ce premier rebord. Puis, par approche selon une direction d'assemblage, grâce aux moyens de positionnement du presseur et à des moyens de positionnement conjugués prévus sur un second rebord de l'aile, le premier rebord est positionné sur le second rebord. Les moyens de positionnement du presseur, par exemple des pions d'indexation, et les moyens de positionnement conjugués de l'aile, par exemple des trous de réception des pions, assurent un positionnement de la peau par rapport à l'aile dans un plan perpendiculaire à la direction d'assemblage, c'est à dire dans un plan parallèle aux premier et second rebords ; tandis que la mise en contact des premier et second rebords assure un positionnement dans la direction d'assemblage. Le montage se termine par la pose de moyens de fixation maintenant le premier rebord de la peau contre le second rebord de l'aile.

Au cours de l'assemblage, l'ensemble formé par le presseur et la peau, ayant une géométrie prédéfinie, ne subit aucune déformation. En effet, le presseur sert à mettre en référence géométrique la peau du pare-chocs et l'aile.

Cette solution connue ne permet pas de respecter les tolérances prescrites sur le profil de raccordement des deux faces extérieures. En effet, la fabrication du presseur fait intervenir un jeu de tolérances pour le placement des moyens de positionnement relativement aux moyens de fixation du presseur. D'autre part, la fabrication de la peau fait intervenir un autre jeu de tolérances pour le placement des moyens de fixation conjugués relativement à une arête de raccordement de la peau qui suit le profil de raccordement souhaité. Ainsi, lors de l'association de la peau et du presseur, ces jeux de tolérances de la chaîne de cotes fonctionnelles s'additionnent, conduisant à une imprécision quant au placement des moyens de positionnement du presseur relativement à l'arête de raccordement de la peau. Dans ces conditions, l'assemblage de la peau sur l'aile ne peut pas respecter les tolérances initialement spécifiées sur le positionnement relatif de la peau et de l'aile, et l'arête de la peau ne suit pas le profil de raccordement avec une précision suffisante.

Pour se dispenser de l'utilisation d'un presseur latéral à l'origine de la présence de défauts géométriques, le document FR-A-2 728 846 divulgue un dispositif d'assemblage comportant, d'une part, un unique ergot parallélépipédique venu de matière sur une première surface de contact du premier rebord de la peau et, d'autre part, une pièce supplémentaire associée à une lumière, placées sur le second rebord de l'aile. Le second rebord de l'aile définit une seconde surface de contact.

En regard du second rebord, la pièce supplémentaire comporte, dans la direction d'assemblage, une succession de faces inclinées, qui guident le premier rebord en position. La direction d'assemblage est sensiblement parallèle aux surfaces de contact. La position d'assemblage est définie, dans la direction d'assemblage, par la mise en butée de la face avant de l'ergot contre le fond d'une encoche dont est munie la lumière, et, dans un plan perpendiculaire à la direction d'assemblage, par le contact mutuel des première et seconde surfaces de contact, ainsi que par l'appui des faces latérales de l'ergot sur les faces latérales de l'encoche de la lumière.

Cette solution présente l'inconvénient d'être de structure complexe. De plus, l'ergot et l'encoche ne déterminent pas totalement la position relative de la peau et de l'aile dans un plan parallèle audits premier et second rebords, puisque l'ergot n'est positionné que sur trois de ses côtés.

On notera également que les faces inclinées de la pièce supplémentaire guident le premier rebord de la peau selon une direction inclinée par rapport à la direction d'assemblage, ce qui déforme la peau par application de contraintes lors de l'assemblage.

L'invention a donc pour but de proposer une peau de pare-chocs dont le positionnement sur une aile satisfait effectivement, après montage, les tolérances géométriques réduites découlant par exemple d'exigences esthétiques fortes.

A cet effet l'invention a pour objet une peau de pare-chocs pour véhicule, du type précité, caractérisé en ce que lesdits premiers moyens de positionnement comprennent au moins un relief et lesdits seconds moyens de positionnement comprennent au moins un évidement conjugué du relief, la pénétration du relief dans l'évidement assurant le positionnement relatif de la peau et de l'aile dans un plan parallèle au surfaces de contact.

Suivant des modes particuliers de l'invention, la peau de pare-chocs comporte une ou plusieurs des caractéristiques suivantes, prise(s) isolément ou suivant toutes les combinaisons techniquement possibles :
- elle comporte au moins deux reliefs de positionnement respectivement placés au voisinage de chacune des extrémités dudit profil de raccordement,
- chaque relief de positionnement est un pion d'indexage dont l'axe est apte à coïncider avec une direction d'assemblage,
- elle est équipée d'un moyen pour rigidifier la peau de pare-chocs au voisinage dudit premier rebord,
- ledit moyen pour rigidifier la peau est une pièce intégrée sur une face intérieure de la peau, opposée à ladite face extérieure, au voisinage dudit premier rebord,
- ledit moyen pour rigidifier la peau est une pièce rapportée sur une face intérieure de la peau, opposée à ladite face extérieure, au voisinage dudit premier rebord,
- ledit moyen pour rigidifier la peau est clipsable sur la face intérieure de la peau,
- ledit moyen pour rigidifier la peau est vissée sur la face intérieure de la peau,
- ledit moyen pour rigidifier la peau est en métal,
- ledit moyen pour rigidifier la peau est en matière plastique,
- les moyens de fixation de la peau de pare-chocs sur l'aile étant du type vis-écrou, ledit premier rebord comporte un premier orifice venant en alignement d'un second orifice dont est muni le second rebord, pour l'insertion de la tige filetée de ladite vis.

L'invention a également pour objet un pare-chocs comportant une peau selon l'invention.

L'invention a également pour objet un véhicule automobile comportant un pare-chocs selon l'invention.

L'invention et ses avantages seront mieux compris à la lecture de la description qui va suivre, donnée uniquement à titre d'exemple, et faite en se référant aux dessins annexés, dans lesquels :
- la Figure 1 représente en perspective, avant assemblage, dans sa partie gauche, une vue partielle de la peau d'un pare-chocs, et, dans la partie droite, une vue partielle de l'aile;
- la Figure 2 représente schématiquement en section la peau de pare-chocs et l'aile de la Figure 1 après assemblage.

La peau d'un pare-chocs avant ou arrière est de forme complexe, mais a globalement une forme en U dont chacun des deux bras latéraux doit être raccordé, par son extrémité libre, à l'une des ailes, droite ou gauche, de la carrosserie du véhicule.

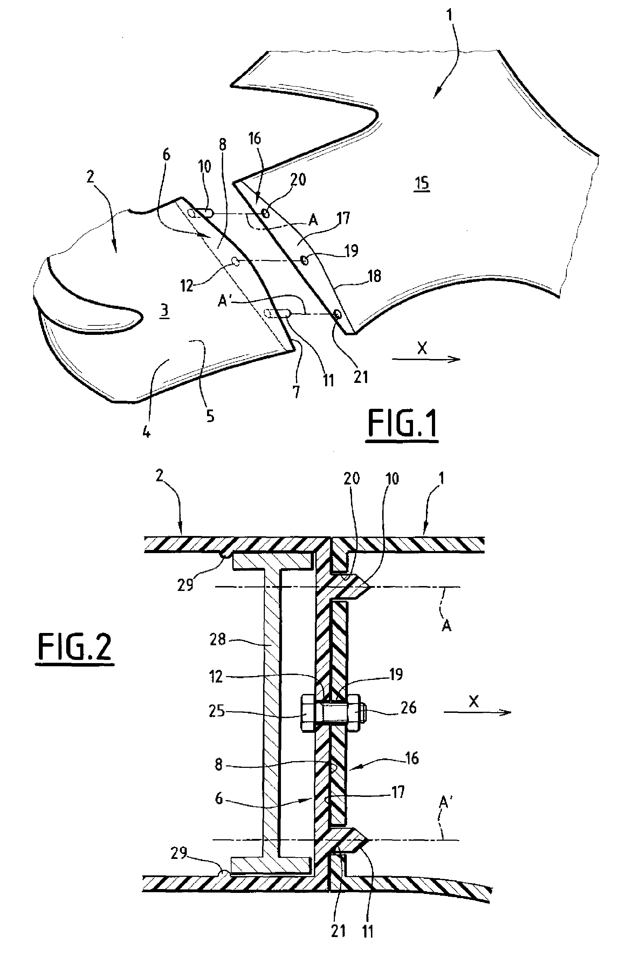

Sur la figure 1, on a représenté partiellement, sur la partie droite, une aile 1 et, sur la partie gauche, une peau de pare-chocs 2.

Seule la paroi 3 d'un des bras latéraux de la peau 2 en U est représentée sur la figure 1. La paroi 3 possède une face extérieure 4 et une face intérieure 5. L'extrémité libre de la paroi 3 présente un premier rebord 6 faisant saillie vers l'intérieur de la peau 2. Le premier rebord 6 définit extérieurement une première surface de contact plane 8 qui se raccorde à la face extérieure 4 de la paroi 3 le long d'une première arête 7. Cette première arête 7 suit le profil de raccordement entre les deux surfaces extérieures respectivement de la paroi et de l'aile.

La surface de contact 8 est munie de reliefs, en tant que moyens de positionnement, qui, dans le mode de réalisation de la figure 1, prennent la forme de deux pions 10 et 11. Les pions 10 et 11 possèdent des axes A et A' qui, en position de montage de la peau 3, coïncident avec une direction d'assemblage X, laquelle est perpendiculaire à la surface 8. Les pions 10 et 11 sont venus de matière avec le premier rebord 6 lors du moulage de la peau 2 en matière plastique. Les pions 10 et 11 sont cylindriques et présentent une tête conique.

La première surface de contact 8 est également munie, en son milieu, d'un orifice circulaire 12 destiné à l'insertion de moyens de fixation comme cela sera décrit ci-après. Un seul point de fixation de ce type est au moins nécessaire, mais pour un placage correct de la peau 2 sur l'aile 1 du véhicule, et surtout lorsque la largeur du U de la peau 2 est importante, il est parfois nécessaire d'avoir deux, voir trois points de fixation.

Sur la partie droite de la figure 1, l'aile 1 comporte une face extérieure 15 et un second rebord 16 qui, lorsque l'aile est positionnée sur le véhicule, fait saillie en direction de l'intérieur du véhicule, à l'écart de la face extérieure 15. Le second rebord 16 définit extérieurement une seconde surface de contact plane 17. La seconde surface de contact 17 se raccorde à la face extérieure 15 de l'aile 1 le long d'une seconde arête 18. Cette seconde arête 18 suit le profil de raccordement entre les deux surfaces extérieures respectivement de la peau et de l'aile.

La seconde surface de contact 17 est munie de moyens de positionnement conjugués qui, dans le mode de réalisation décrit, prennent la forme de trous 20 et 21 circulaires, aptes à coopérer avec les pions 10 et 11 du premier rebord 6 de la peau 2 lors du montage.

Par ailleurs, la seconde surface de contact 17 est munie, en son milieu, d'un orifice circulaire 19 destiné à être aligné, dans l'état assemblé, avec l'orifice 12 du premier rebord 6 de la peau 2 pour le passage de moyens de fixation.

Dans un premier mode de réalisation, la peau 2 est réalisée par moulage d'une matière plastique de manière à présenter, tout au moins au voisinage du premier rebord 6, une rigidité suffisante pour que la première surface de contact 8 et les pions 10 et 11 possèdent effectivement, avant montage, une géométrie prédéfinie.

Le montage de la peau 2 sur l'aile 1 va maintenant être décrit plus en détail. L'aile 1 est d'abord fixée sur la caisse du véhicule. Puis la peau 2 est approchée selon la direction d'assemblage X perpendiculairement à la surface 17 et parallèlement à un plan vertical médian de la caisse. La peau 2, en forme de U, est assemblée dans sa partie centrale à la caisse du véhicule et par ses parois latérales à chacune des ailes droite et gauche du véhicule.

Lors du déplacement de la peau 2 selon la direction d'assemblage X, les pions 10 et 11 pénètrent dans les trous 20 et 21, les pions étant en parfaite référence géométrique avec les trous. Lorsque le mouvement de déplacement selon la direction d'assemblage X se poursuit, les pions 10 et 11, dont la tête est conique, entrent en contact avec la circonférence des trous 20 et 21, de manière à guider la peau 2 rigide pour la positionner correctement par rapport à l'aile 1 dans un plan parallèle aux première et seconde surfaces de contact 8 et 17. Le mouvement de déplacement selon la direction d'assemblage X se finit lorsque la première surface de contact 8 vient en butée contre la seconde surface de contact 17. La première surface de contact 8 est en référence géométrique avec la seconde surface de contact 17 de telle manière que le contact entre ces deux surfaces soit un contact surfacique. Dans un plan perpendiculaire à la direction d'assemblage X, les moyens de positionnement 10 et 11 et les moyens de positionnement conjugués 20 et 21 assurent un raccordement précis de la première face extérieure 4 de la peau 2 et de la seconde face extérieure 15 de l'aile 1, au niveau de leurs arêtes respectives 7 et 18 qui suivent le profil de raccordement spécifié compte tenu des tolérances admises.

Dans un second temps, l'orifice 12 et l'orifice 19 étant alignés, un ensemble vis - écrou 25, 26 (cf. figure 2) est utilisé en tant que moyen de fixation en position de la peau 2 sur l'aile 1. En variante, d'autres types de moyen de fixation peuvent être envisagés. On notera que, dans le mode de réalisation décrit, un seul moyen de fixation est utilisé car les moyens de positionnement et les moyens de positionnement conjugués coopèrent de façon à empêcher tout glissement relatif des première et seconde surfaces de contact 8 et 17.

Puisque les moyens de positionnement 10, 11 permettent le montage de la peau 2 sur l'aile 1 par un déplacement selon une unique direction X, sans que le premier rebord 6 ne soit déformé, l'opération d'assemblage est automatisable de manière à être mise en oeuvre par un bras robotisé déplaçant la peau 2 selon la direction d'assemblage X.

En se référant plus particulièrement à la figure 2, un second mode de réalisation de l'invention autorisant l'assemblage de la peau sur l'aile par translation selon la direction d'assemblage X va être décrit.

Ce second mode de réalisation est adapté au cas où la peau 2 ne présente pas, après moulage, une rigidité suffisante au niveau de son premier rebord 6 garantissant que, dans un état non assemblé, les pions 10 et 11 soient en référence géométrique avec les trous 20 et 21 du second rebord.

Pour cela, selon ce second mode de réalisation, un moyen de renfort 28 permet de rigidifier la paroi 3, au moins au voisinage du premier rebord 6. Le moyen de renfort 28 est constitué par un profilé métallique à section en I, clipsé sur la surface intérieure 5 de la paroi 3 de manière à rigidifier le premier rebord 6. Par exemple, le moyen de renfort 28 est positionné par l'insertion à force de chacune de ses extrémités au-delà des reliefs 29 dont est munie la surface intérieure 5. On assure ainsi que les pions 10 et 11 et la première surface de contact 6 adoptent une géométrie de référence précise.

On notera que dans ce second mode de réalisation, les pions 10 et 11 de positionnement sont venus de matière avec la peau 2 du pare-chocs lors de son moulage, et que le moyen de renfort 28 n'a pour fonction que de rigidifier le rebord 6 avant l'opération d'assemblage proprement dite.

Lors du montage de la peau 2 selon ce second mode de réalisation, le moyen de renfort 28 est d'abord clipsé sur la surface intérieure 5 de chacune des parois latérales de la peau 2. Puis, les pions 10 et 11 étant alors en référence avec les trous 20 et 21 et la première surface de contact 8 ayant le même profil que la seconde surface de contact 17, on réalise l'étape de déplacement de la peau 2 selon la direction d'assemblage X. Tout comme dans le premier mode de réalisation, à l'issue du montage qui s'effectue sans contrainte ni déformation, on obtient un positionnement relatif précis du pare-chocs sur l'aile.

On constate donc que, selon l'invention, l'opération de montage se fait simplement par translation de la peau du pare-chocs selon une direction d'assemblage perpendiculaire aux surfaces de contact et peut donc être avantageusement automatisée. Enfin, le raccordement de la première face extérieure de la peau avec la seconde face extérieure de l'aile est précis puisqu'un seul jeu de tolérances est utilisé pour la peau, jeu correspondant au positionnement des pions 10 et 11 relativement à la première arête 7 et aux diamètres de ces pions et des trous 20 et 21.

En variante, les surfaces de contact 8 et 17 peuvent être non planes.

En variante également, les trous 20 et 21 peuvent être des trous borgnes.

En variante encore, la direction d'assemblage X peut être inclinée par rapport aux surfaces 8 et 17, auquel cas les axes A et A' des pions 10 et 11 sont inclinés de façon correspondante par rapport à la surface 8.

En variante, le moyen de renfort est une pièce métallique usinée. II peut être vissé sur la peau 2. Il peut également être réalisé dans une matière plastique, moulée directement avec la peau ou surmoulée sur celle-ci.

## Revendications

1. Peau de pare-chocs pour véhicule, comportant une première face extérieure (4) devant être raccordée, le long d'un profil de raccordement, à une seconde face extérieure (15) d'une aile (1) du véhicule, la peau (2) comportant un premier rebord (6) définissant une première surface de contact (8) formant avec la face extérieure (4) de la peau une première arête (7) qui suit le profil de raccordement, l'aile (1) comportant un second rebord (16) définissant une seconde surface de contact (17) formant avec la face extérieure de l'aile une seconde arête (18) qui suit le profil de raccordement, la peau comportant en outre des premiers moyens de positionnement (10, 11) venus de matière avec la peau et en saillie sur ladite première surface de contact, ces premiers moyens de positionnement étant aptes à coopérer avec des seconds moyens de positionnement conjugués (20, 21) prévus sur ladite seconde surface de contact, pour positionner la peau de pare-chocs sur l'aile de telle sorte que les première et seconde surfaces de contact sont appliquées l'une contre l'autre dans une position relative prédéterminée, avant mise en place de moyens de fixation (25, 26) dudit premier rebord sur ledit second rebord, **caractérisée en ce que** lesdits premiers moyens de positionnement comprennent au moins un relief et **en ce que** lesdits seconds moyens de positionnement comprennent au moins un évidement conjugué dudit relief, la pénétration du relief dans l'évidement assurant le positionnement relatif de la peau et de l'aile dans un plan parallèle audites surfaces de contact.

2. Peau de pare-chocs selon la revendication 1, **caractérisée en ce qu'**elle comporte au moins deux reliefs de positionnement (10, 11) respectivement placés au voisinage de chacune des extrémités dudit profil de raccordement.

3. Peau de pare-chocs selon la revendication 2, **caractérisée en ce que** le ou chaque relief de positionnement est un pion d'indexage (10, 11) dont l'axe (A, A') est apte à coïncider avec une direction d'assemblage (X).

4. Peau de pare-chocs selon l'une quelconque des revendications précédentes, **caractérisée en ce qu'**elle est équipée d'un moyen (28) pour rigidifier la peau de pare-chocs (2) au voisinage dudit premier rebord (6).

5. Peau de pare-chocs selon la revendication 4, **caractérisée en ce que** ledit moyen pour rigidifier la peau est une pièce intégrée sur une face intérieure (5) de la peau (2), opposée à ladite face extérieure (4), au voisinage dudit premier rebord (6).

6. Peau de pare-chocs selon la revendication 4, **caractérisée en ce que** ledit moyen (28) pour rigidifier la peau est une pièce rapportée sur une face intérieure (5) de la peau (2), opposée à ladite face extérieure (4), au voisinage dudit premier rebord (6).

7. Peau de pare-chocs selon la revendication 6, **caractérisée en ce que** ledit moyen (28) pour rigidifier la peau est clipsable sur la face intérieure (5) de la peau (2).

8. Peau de pare-chocs selon la revendication 6, **caractérisée en ce que** ledit moyen pour rigidifier la peau est vissée sur la face intérieure (5) de la peau (2).

9. Peau de pare-chocs selon l'une quelconque des revendications 5 à 8, **caractérisée en ce que** ledit moyen (28) pour rigidifier la peau (2) est en métal.

10. Peau de pare-chocs selon l'une quelconque des revendications 5 à 8, **caractérisée en ce que** ledit moyen (28) pour rigidifier la peau (2) est en matière plastique.

11. Peau de pare-chocs selon l'une quelconque des revendications 1 à 10, **caractérisée en ce que**, les moyens de fixation (25, 26) de la peau de pare-chocs (2) sur l'aile (1) étant du type vis - écrou, ledit premier rebord (6) comporte un premier orifice (12) venant en alignement d'un second orifice (19) dont est muni le second rebord (16), pour l'insertion de la tige filetée de ladite vis.

12. Pare-chocs pour véhicule, du type comportant une peau, **caractérisé en ce que** ladite peau est une peau (2) selon l'une quelconque des revendications 1 à 11.

13. Véhicule automobile, **caractérisé en ce qu'**il comporte un pare-chocs selon la revendication 12.
